(19) Europäisches Patentamt
European Patent Office
Office européen des brevets

(11) **EP 3 527 914 A1**

(12) **EUROPEAN PATENT APPLICATION**

(43) Date of publication:
**21.08.2019 Bulletin 2019/34**

(51) Int Cl.:
*F25B 41/04* (2006.01)          *F16K 11/065* (2006.01)
*F16K 11/074* (2006.01)

(21) Application number: **19157495.3**

(22) Date of filing: **15.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.02.2018 JP 2018024762**

(71) Applicant: **Fujikoki Corporation
Tokyo 158-0082 (JP)**

(72) Inventors:
• **Morita, Noriyuki
  Tokyo, 1580082 (JP)**
• **Tabuchi, Kensuke
  Tokyo, 1580082 (JP)**
• **Kibune, Hitoshi
  Tokyo, 1580082 (JP)**

(74) Representative: **Schön, Christoph
  Dr. Schön, Neymeyr & Partner mbB
  Bavariaring 26
  80336 München (DE)**

(54) **MULTI-WAY SWITCHING VALVE**

(57)     To provide a multi-way switching valve capable of effectively suppressing reduction rate in maximum flowable rate of an entire flow channel.

A four-way switching valve 1 comprises a valve seat 20 having the valve seat surface 21 provided with S port 22, E port 23 and C port 24, a valve element 30 provided on the valve surface 21, a second conduit 62, a third conduit 63 and a fourth conduit 64 allowed to communicate with each port. When the valve element 30 is at a first stop position, U-shaped flow channel 31 is formed so as to allow the E port 23 and the S port 22 to communicate each other. The S port 22 and the second conduit 62 form a linear flow channel 72. The E port 23 and the third conduit 63 form a linear flow channel 73. When a height of the U-shaped flow channel is defined as H, and a diameter of a minimum diameter part of the linear flow channels 72, 73 allowed to communicate by the flow channel 31 is defined as D, a below expression (1) is satisfied:

$$(1)\quad 1.05 \leq H/D \leq 1.75.$$

FIG.1

EP 3 527 914 A1

## Description

BACKGROUND OF THE INVENTION

Field of the Invention

The present invention relates to a multi-way switching valve used for switching a flow channel.

Background Art

The multi-way switching valve is, for example, used for switching a refrigerant channel in a refrigeration cycle system for use in an air conditioner.

Patent Literature 1 discloses an example of a conventional multi-way switching valve, which is a four-way switching valve for switching connection of four ports. Such a four-way switching valve comprises a cylinder-shaped valve main body. The valve main body is provided with a first conduit allowed to communicate with an inside thereof. The inside of the valve main body is provided with a valve seat having a valve seat surface at which three ports are opened. There are provided linear second, third and fourth conduits which are allowed to communicate with the inside of the valve main body through each port at the valve seat surface. The four-way switching valve comprises a valve element slidably disposed on the valve seat surface. The valve element forms a U-shaped flow channel, and the U-shaped flow channel allows the ports at the valve seat surface and the two linear flow channels formed by the conduits to communicate.

Citation List

Patent Literature

[Patent Literature 1] Japanese Unexamined Patent Application Publication No. 2013-227989

SUMMARY OF INVENTION

Maximum flow rate allowed to flow into a flow channel (referred to as a maximum flowable rate in the description) is determined by a shape or a diameter of the flow channel. The above-mentioned four-way switching valve has a configuration allowing two linear flow channels to communicate with each other using a U-shaped flow channel, and the U-shaped flow channel may cause increase in flow resistance or turbulent flow in comparison with the linear flow channel. Accordingly, the maximum flowable rate of an entire flow channel may be lower than that of the linear flow channel.

The present invention has been made in view of the above-described problems, and an object of the present invention is to provide a multi-way switching valve which can effectively suppress reduction in maximum flowable rate of an entire flow channel.

The present inventors have paid attention to the flow path of the multi-way switching valve, and made intensive studies for a relationship between a shape of the U-shaped flow channel formed by an inner wall surface of the valve element and a valve seat surface and a maximum flowable rate. As a result, it has been found that the reduction in maximum flowable rate of the entire flow channel is suppressed when each flow channel is configured so that a ratio of a height from the valve seat surface to the inner wall surface of the valve element in the U-shaped flow channel to a diameter of linear flow channels communicating with each other using the U-shaped flow channel is within a predetermined range of value, and the present invention has been made.

In order to solve the above-described problems, a multi-way switching valve of the present invention comprises a valve seat having a valve seat surface provided with a plurality of ports, a valve element provided on the valve seat surface, and a plurality of linear conduits allowed to communicate with the plurality of ports, an inner wall surface of the valve element and the valve seat surface configure a U-shaped flow channel for allowing two ports of the plurality of ports to communicate each other according to a stop position, wherein a below expression (1) is satisfied:

$$(1)\ 1.05 \leq H/D \leq 1.75$$

where

H: a height from the valve seat surface in a center of the U-shaped flow channel to the inner wall surface, and

D: a diameter of a minimum diameter part of two linear flow channels formed by the conduits and the ports allowed to communicate by the U-shaped flow channel.

According to the present invention, an inner wall surface of a valve element and a valve seat surface form a U-shaped flow channel allowing two ports of a plurality of ports to communicate according to a stop position. When H denotes a height from a valve seat surface in a center of the U-shaped flow channel to an inner wall surface of a valve element, and D denotes a diameter of a minimum diameter part of two linear flow channels formed by a conduit and a port allowed to communicate by the U-shaped flow channel, the above-described expression (1) is satisfied. Thus configured, a relationship between the U-shaped flow channel and the linear flow channels allowed to communicate thereby can be optimized, and reduction rate of the maximum flowable rate is suppressed to 10% or less. Therefore, a fluid flows effectively.

By satisfying the below expression (2), the reduction rate of the maximum flowable rate is suppressed to 3% or less.

$$(2)\ 1.2 \le H/D \le 1.6$$

By satisfying the below expression (3), the reduction rate of the maximum flowable rate is suppressed to 1% or less.

$$(3)\ 1.3 \le H/D \le 1.5$$

BRIEF DESCRIPTION OF THE DRAWINGS

Fig. 1 illustrates a multi-way switching valve according to the first embodiment of the present invention;
Fig. 2 illustrates configuration of a flow channel of the multi-way switching valve in Fig. 1;
Fig. 3 is a graph showing a relationship of a ratio of H/D and a rate of a maximum flowable rate of an entire flow channel to the maximum flowable rate of a linear flow channel, where H denotes a height at a center of a U-shaped flow channel in a valve element, and D denotes a diameter of a minimum diameter part of two linear flow channels allowed to communicate by the U-shaped flow channel;
Fig. 4 is a perspective view of the multi-way switching valve according to the second embodiment of the present invention;
Fig. 5 is a vertical cross sectional view of the multi-way switching valve in Fig. 4;
Fig. 6 is a cross sectional view along a line B-B in Fig. 5; and
Fig. 7 is a cross sectional view of an area of the valve element of the multi-way switching valve in Fig. 4.

DETAILED DESCRIPTION OF PREFERRED EMBODIMENT

(First Embodiment)

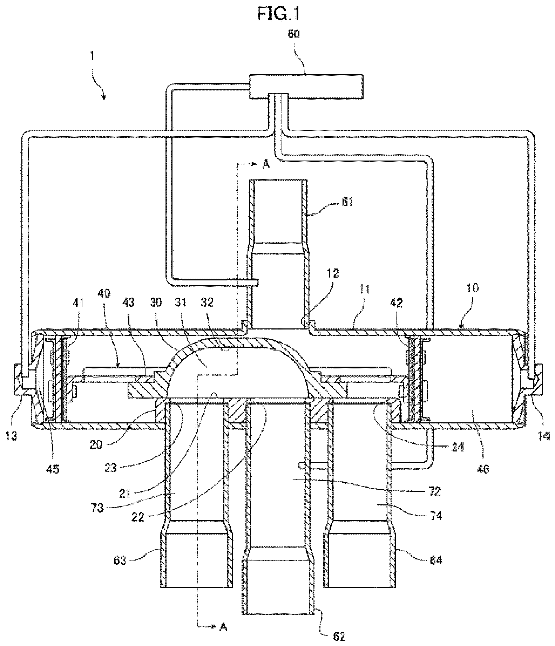

Hereinafter, a description will be made of a four-way switching valve as a multi-way switching valve in accordance with the first embodiment of the present invention with reference to the Figs. 1 to 3. The four-way switching valve of the present embodiment is, as one example, used for switching a refrigerant channel in a refrigeration cycle system for use in an air conditioner. Such four-way switching valve is used not only for switching the refrigerant channel, but also for switching a flow channel of various kind of fluids. The second embodiment is also the same.

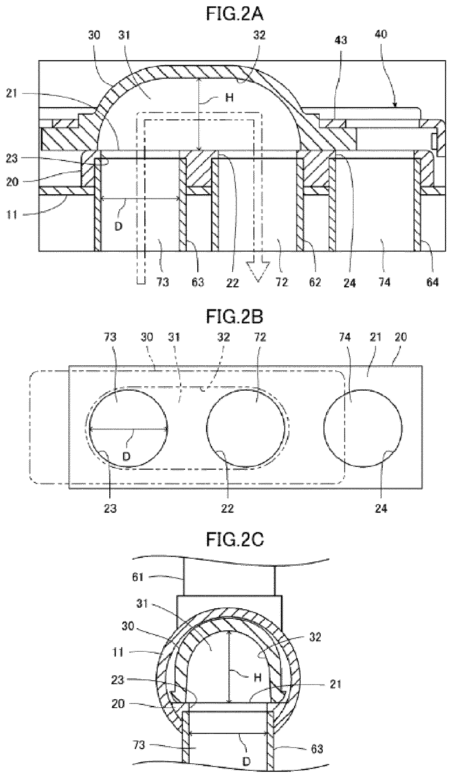

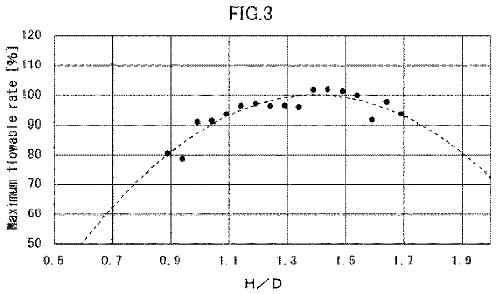

Fig. 1 illustrates the multi-way switching valve (namely, four-way switching valve) according to the first embodiment of the present invention, and a part thereof is shown in a cross sectional view. Fig. 2 illustrates the configuration of a flow channel of the multi-way switching valve in Fig. 1. Fig. 2A is an enlarged view of an area of a valve element, Fig. 2B is a plane view of a valve seat surface, and Fig. 2C is a cross sectional view along a line A-A in Fig. 1. In Fig. 2A, an arrow indicated with two-dot chain line schematically shows a flow of fluid. Fig. 3 is a graph showing a relationship of a ratio of H/D and a rate of a maximum flowable rate of an entire flow channel to the maximum flowable rate of a linear flow channel, where H denotes a height at a center of a U-shaped flow channel in a valve element, and D denotes a diameter of a minimum diameter part of two linear flow channels allowed to communicate by the U-shaped flow channel. In the description of the present embodiments, terms of "upper" and "lower" correspond to an upper direction and downward direction in Fig. 1 and Fig. 2A and 2C.

The four-way switching valve 1 according to the present embodiment is a flow channel switching valve for switching connection of the flow channel by linearly sliding the valve element on the valve seat surface. As shown in Fig. 1 and Fig. 2, the four-way switching valve 1 comprises a valve main body 10, a valve seat 20, a valve element 30, a piston section 40 and a pilot section 50.

The valve main body 10 has a cylindrical shape. A wall member 11 of the valve main body 1 has an opening 12. A first conduit 61 is fit in the opening 12, and the first conduit 61 and an inside of the valve main body 1 are allowed to communicate. The first conduit 61 is connected to a discharge portion of a compressor not depicted, and a high-temperature and high-pressure refrigerant flows.

The valve seat 20 is arranged the inside of the valve main body 10. The valve seat 20 comprises a valve seat surface 21 facing the opening 12. The valve seat surface 21 has S port 22, E port 23 and C port 24 which are circular openings.
The S port 22, E port 23 and C port 24 are allowed to communicate with a linear second conduit 62, a linear third conduit 63 and a linear fourth conduit 64 penetrating the wall member 11 of the valve main body 10. In the present embodiment, a diameter of each port and an inner diameter of the smallest part (minimum diameter part) of each conduit is the same in size (a diameter D). The second conduit 62 is connected to a suction portion of the compressor not depicted. The third conduit 63 is connected to a heat exchanger not depicted. The fourth conduit 64 is connected to the heat exchanger not depicted.

The valve element 30 has a dome shape and is provided on the valve seat surface 21 so as to slidably move in horizontal direction of Fig. 1.

An inner wall surface 32 of the valve element 30 and the valve seat surface 21 configure a U-shaped flow channel 31. The flow channel 31 has a shape of dyad symmetry (or mirror-symmetry). A shape of the cross section perpendicular to a flow direction of the flow channel 31 becomes an almost semicircular shape or almost semi-elliptic shape over the entire flow channel. The inner wall surface 32 of the valve element 30 is a wall surface 32 of the flow channel 31.

The valve element 30 comprises a first stop position (for example, a stop position during cooling operation) as shown in Fig. 1 and Fig. 2, and a second stop position not depicted (for example, a stop position during heating operation). The valve element 30 is slided on the valve seat surface 21 and positioned at the first stop position and the second stop position. The flow channel 31 allows two ports of a plurality of ports opening at the valve seat surface 21 to communicate according to the stop position.

When the valve element 30 is at the first stop position, the flow channel 31 allows two ports of E port 23 and S port 22 to communicate. That is, the U-shaped flow channel 31 allows a linear flow channel 73 formed by the E port 23 and the third conduit 63 and a linear flow channel 72 formed by the S port 22 and the second conduit 62 to communicate each other.

When the valve element 30 is at the second stop position, the flow channel 31 allows two ports of C port 24 and S port 22 to communicate. That is, the U-shaped flow channel 31 allows a linear flow channel 74 formed by the C port 24 and the fourth conduit 64 and the linear flow channel 72 formed by the S port 22 and the second conduit 62 to communicate.

A piston section 40 comprises a first piston 41, a second piston 42 and a connecting member 43 for connecting the same. The first piston 41 is disposed between the valve element 30 and an end cover 13 provided at an end portion of the valve main body 10 (left end portion of Fig. 1), and forms a working chamber 45 between the end cover 13. The second piston 42 is disposed between the valve element 30 and an end cover 14 provided at another end portion of the valve main body 10 (right end portion of Fig. 1), and forms a working chamber 46 between the end cover 14. The connecting member 43 is connected to the valve element 30 so that the valve element 30 moves together.

The pilot section 50 is configured to switch connections to the working chamber 45, the working chamber 46, the first conduit 61 and the second conduit 62, and to control pressure of the refrigerant in the working chamber 45 and the working chamber 46. Thereby, the piston section 40 is moved toward either left or right side by difference of the refrigerant pressures in the working chamber 45 and the working chamber 46. In accordance with movement of the piston section 40, the valve element 30 connected by the connecting member 43 is slided on the valve seat surface 21 and positioned at the first stop position or the second stop position.

When the valve element 30 is at the first stop position, the refrigerant discharged from the discharge portion of the compressor flows into the valve main body 10 from the first conduit 61, passes through an outside of the valve element 30, and flows into the fourth conduit 64 from the C port 24. From the fourth conduit 64, the refrigerant flows in the third conduit 63 through the heat exchanger, passes through in the order of the E port 23, the flow channel 31 and the S port 22, and flows into the second conduit 62. Finally, the refrigerant returns to a suction portion of the compressor.

When the valve element 30 is at the second stop position, the refrigerant discharged from the discharge portion of the compressor flows into the valve main body 10 from the first conduit 61, passes through the outside of the valve element 30, and flows into the third conduit 63 from the E port 23. From the third conduit 63, the refrigerant flows in the fourth conduit 64 through the heat exchanger, passes through in the order of the C port 24, the flow channel 31 and the S port 22, and flows into the second conduit 62. Finally, the refrigerant returns to the suction portion of the compressor.

The present inventors prepared a plurality of the four-way switching valve 1 having a difference ratio (H/D), where H denotes a height from the valve seat surface 21 in a center of the U-shaped flow channel 31 to the wall surface 32 of the valve element 30, and D denotes a diameter of a minimum diameter part of linear flow channels 72, 73. When the valve element 30 is at the first stop position, measurement was made for the above ratio (H/D) and a percentage (%) of a maximum flowable rate of an entire flow channel (a flow channel sequentially arranged in the order of the flow channel 73, the flow channel 31 and the flow channel 72) to the maximum flowable rate of the linear flow channels 72, 73. The measurement results are shown in Fig. 3. If the valve element 30 is at the second stop position, the same results are obtained. In a graph of Fig. 3, it is presumed that measured values having the percentage of 100% or more is caused by manufacturing errors of the height H and the diameter D.

As apparent from Fig. 3, it is found that the maximum flowable rate of the entire flow channel is 90% or more, and reduction rate is suppressed to 10% or less, when the above ratio (H/D) is 1.05 or more and 1.75 or less. The range of value is shown by an expression (1).

$$(1) \ 1.05 \le H/D \le 1.75$$

It is found that the maximum flowable rate of the entire flow channel is 97% or more, and reduction rate is suppressed to 3% or less, when the above ratio (H/D) is 1.2 or more and 1.6 or less. The range of value is shown by an expression (2).

$$(2) \ 1.2 \le H/D \le 1.6$$

It is found that the maximum flowable rate of the entire flow channel is 99% or more, and reduction rate is suppressed to 1% or less, when the above ratio (H/D) is 1.3 or more and 1.5 or less. The range of value is shown by an expression (3).

$$(3)\ 1.3 \le H/D \le 1.5$$

As described above, according to the four-way switching valve 1 of the present embodiment, the valve element 30 forms the flow channel 31 at the first stop position so as to allow the E port 23 and the S port 22 to communicate. When H denotes a height from a valve seat surface 21 in the center of the U-shaped flow channel 31 to the wall surface 32, and D denotes a diameter of the minimum diameter part of linear flow channels 72, 73 allowed to communicate by the flow channel 31, the above-described expression (1) is satisfied. Thus configured, a relationship between the U-shaped flow channel 31 and the linear flow channels 72, 73 allowed to communicate by the flow channel 31 can be optimized, and reduction rate of the maximum flowable rate is suppressed to 10% or less. Therefore, a fluid flows effectively.

By satisfying the below expression (2), the reduction rate of the maximum flowable rate is suppressed to 3% or less. Furthermore, by satisfying the below expression (3), the reduction rate of the maximum flowable rate is suppressed to 1% or less.

(Second Embodiment)

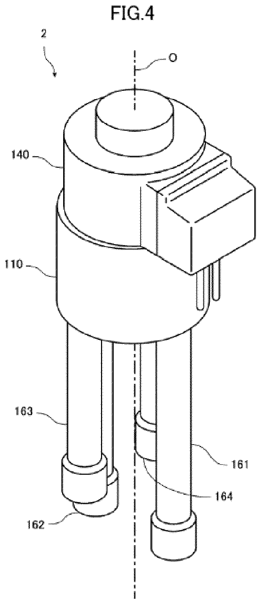

Hereinafter, a description will be made of a multi-way switching valve in accordance with the second embodiment of the present invention with reference to the Figs. 4 to 7.

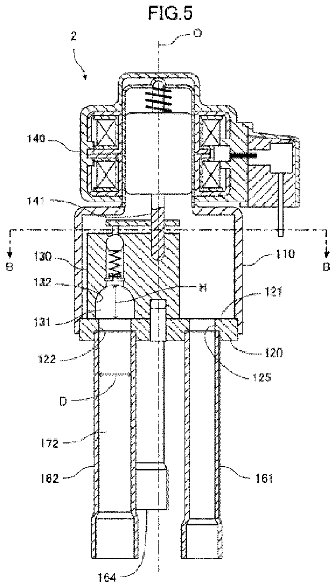

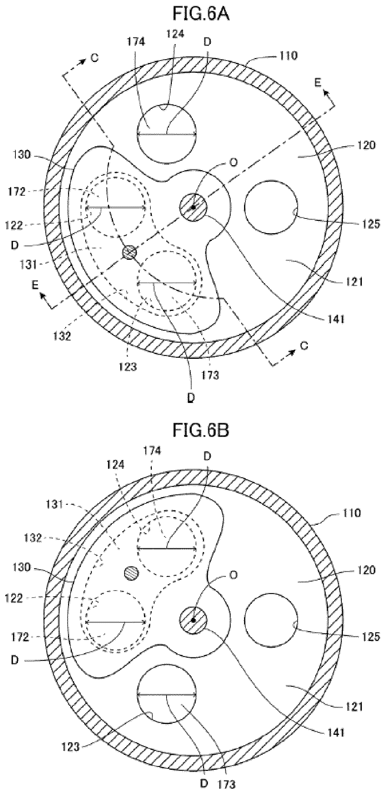

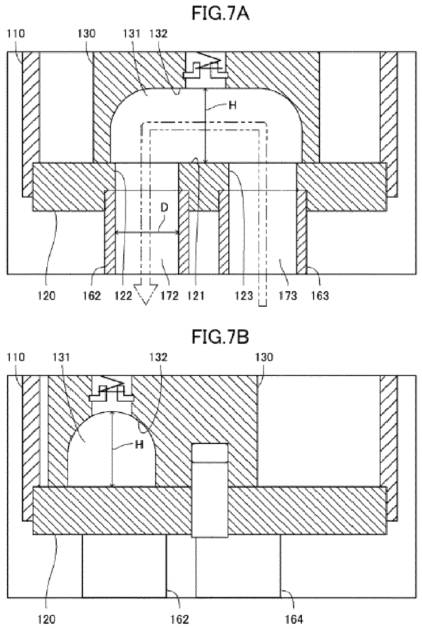

Fig. 4 is a perspective view of the multi-way switching valve (namely, four-way switching valve) according to the second embodiment of the present invention. Fig. 5 is a vertical cross sectional view of the multi-way switching valve in Fig. 4. Fig. 6 is a cross sectional view along a line B-B in Fig. 5. Fig. 6A shows a status that the valve element is at the first stop position in the multi-way switching valve according to the second embodiment, and Fig. 6B shows a status that the valve element is at the second stop position in the multi-way switching valve according to the second embodiment. Fig. 7 is a cross sectional view of an area of the valve element of the multi-way switching valve in Fig. 4. Fig. 7A is a cross sectional view along a line C-C in Fig. 6A, and Fig. 7B is a cross sectional view along a line E-E in Fig. 6A. In Fig. 7A, an arrow indicated with two-dot chain line schematically shows a flow of fluid (refrigeration). In the description of the present embodiments, terms "upper" and "lower" correspond to an upper direction and downward direction in Fig. 4, Fig. 5 and Fig. 7.
The four-way switching valve 2 of the present embodiment is a rotary flow channel switching valve which switches connection of the flow channel by each slide in a circular arc direction of the valve element having an approximate planar-view fan-shape. As shown in Fig. 4 and Fig. 5, the four-way switching valve 2 comprises a valve main body 110, a valve seat 120, a valve element 130 and a valve element driving section 140.

The valve main body 110 has a cylindrical shape. The valve element driving section 140 is provided in a manner of closing an upper end opening of the valve main body 110. A drive shaft 141 of the valve element driving section 140 is installed at a position corresponding to a pivot of the fan-shape valve element 130. The valve seat 120 is provided so as to close a lower end opening of the valve main body 110. The valve seat 120 comprises a valve seat surface 121 facing upward. As shown in Fig. 6, the valve seat surface 121 has D port 125, S port 122, E port 123 and C port 124 which are circular openings.
The D port 125, S port 122, E port 123 and C port 124 are allowed to communicate with a linear first conduit 161, a linear second conduit 162, a linear third conduit 163 and a linear fourth conduit 164. A diameter of each port and an inner diameter of the smallest part (minimum diameter part) of each conduit is the same in size (a diameter D). The first conduit 161 is connected to a discharge portion of a compressor not depicted, and a high-temperature and high-pressure refrigerant flows. The second conduit 162 is connected to a suction portion of the compressor not depicted. The third conduit 163 is connected to a heat exchanger not depicted. The fourth conduit 164 is connected to the heat exchanger not depicted.
The valve element 130 has a column shape with an approximate planar-view fan-shape. A position corresponding to a pivot of the fan-shape is a rotary axis O and the valve element 130 is provided on the valve seat surface 121 so as to slidably move in a circular arc direction.
An inner wall surface 132 of the valve element 130 and the valve seat surface 121 configure a U-shaped flow channel 131. The flow channel 131 has a shape of mirror-symmetry with respect to a center in a flow direction. A shape of the cross section perpendicular to a flow direction of the flow channel 31 becomes an almost semicircular shape or almost semi-elliptic shape over the entire flow channel. The inner wall surface 132 of the valve element 130 is also a wall surface 132 of the flow channel 131.
The valve element 130 has a first stop position (for example, a stop position during cooling operation) as shown in Fig. 6A and a second stop position (for example, a stop position during heating operation) as shown in Fig. 6B. The valve element 130 is rotated by the valve element driving section 140, slided on the valve seat surface 121 and positioned at the first stop position and the second stop position. The flow channel 131 allows two ports of a plurality of ports opening at the valve seat surface 121 to communicate according to the stop position.
When the valve element 130 is at the first stop position, the flow channel 131 allows two ports of E port 123 and S port 122 to communicate. That is, the U-shaped flow channel 131 allows a linear flow channel 173 formed by the E port 123 and the third conduit 163 and a linear flow channel 172 formed by the S port 122 and the second conduit 162 to communicate each other.

When the valve element 130 is at the second stop position, the flow channel 131 allows two ports of C port 124 and S port 122 to communicate. That is, the U-shaped flow channel 131 allows a linear flow channel 174 formed by the C port 124 and the fourth conduit 164 and the linear flow channel 172 formed by the S port 122 and the second conduit 162 to communicate each other.

When the valve element 130 is at the first stop position and the second stop position, a flow of the refrigeration is the same as that of the first embodiment.

Regarding the four-way switching valve 2 of the second embodiment, when the valve element 130 is at the first stop position, measurement was made for a ratio (H/D) and a percentage (%) of a maximum flowable rate of an entire flow channel (a flow channel sequentially arranged in the order of the flow channel 173, the flow channel 131 and the flow channel 172) to the maximum flowable rate of the linear flow channels 172, 173, where H denotes a height from the valve seat surface 121 in a center of the U-shaped flow channel 131 to the wall surface 132, and D denotes a diameter of a minimum diameter part of the linear flow channels 172, 173. The measurement result is the same as that of the first embodiment. If the valve element 130 is at the second stop position, the same results are obtained as the first embodiment.

Regarding the four-way switching valve 2 of the second embodiment, by satisfying expressions (1), (2) and (3), reduction rate of the maximum flowable rate of the entire flow channel can be effectively suppressed in a same manner as the first embodiment. Therefore, the fluid flows efficiently.

In the above-described first embodiment and the second embodiment, configuration using the four-way switching valve is illustrated as the present invention, however it should not be limited thereto. Insofar as it is not contrary to a purpose of the present invention, a multi-way switching valve such as six-way switching valve is applicable.

Embodiments according to the present invention are illustrated, the present invention is not limited thereto. If a person skilled in the art appropriately adds and Deletes elements, changes a design and combines features of the embodiments against the aforementioned embodiments, without beyond a scope of the present invention, such modification may be included in a scope of the present invention.

Reference Signs List

(First Embodiment)

1: four-way switching valve
10: valve main body
11: wall member
12: opening
13, 14: end cover
20: valve seat
21: valve seat surface
22: S port
23: E port
24: C port
30: valve element
31: flow channel
32: wall surface
40: piston section
41: first piston
42: second piston
43: connecting member
45, 46: working chamber
50: pilot section
61: first conduit
62: second conduit
63: third conduit
64: fourth conduit
72, 73, 74: linear flow channel

(Second Embodiment)

2: four-way switching valve
110: valve main body
120: valve seat
121: valve seat surface
122: S port
123: E port
124: C port
125: D port
130: valve element
131: U-shaped flow channel
132: wall surface
140: valve element driving section
161: first conduit
162: second conduit
163: third conduit
164: fourth conduit
172, 173, 174: linear flow channel
O: rotary axis of the valve element

**Claims**

1. multi-way switching valve (1) comprising:

   a valve seat (20) having a valve seat surface (21) provided with a plurality of ports (22, 23, 24), a valve element (30) provided on said valve seat surface, and a plurality of linear conduits (62, 63, 64) allowed to communicate with said plurality of ports;

an inner wall surface (32) of said valve element and said valve seat surface configuring a U-shaped flow channel (31) for allowing two ports of said plurality of ports to communicate each other according to a stop position, **characterized in that** a below expression (1) is satisfied:

$$(1)\ 1.05 \leq H/D \leq 1.75$$

where

H: a height from said valve seat surface in a center of said U-shaped flow channel to said inner wall surface, and
D: a diameter of a minimum diameter part of two linear flow channels formed by said conduits and said ports allowed to communicate by said U-shaped flow channel.

# FIG.1

## FIG.2A

## FIG.2B

## FIG.2C

FIG.3

FIG.4

FIG.5

## FIG.6A

## FIG.6B

## FIG.7A

## FIG.7B

Europäisches
Patentamt

European
Patent Office

Office européen
des brevets

# EUROPEAN SEARCH REPORT

Application Number

EP 19 15 7495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/168882 A1 (SAGINOMIYA SEISAKUSHO INC [JP]) 5 October 2017 (2017-10-05) * & associated description; figures 1-5 * | 1 | INV. F25B41/04 F16K11/065 F16K11/074 |
| X | JP 2017 180824 A (SAGINOMIYA SEISAKUSHO INC) 5 October 2017 (2017-10-05) * the whole document * | 1 | |
| X | DE 29 44 593 A1 (ROBERTSHAW CONTROLS CO) 14 May 1980 (1980-05-14) * the whole document * | 1 | |
| X | JP 2017 003107 A (SAGINOMIYA SEISAKUSHO INC) 5 January 2017 (2017-01-05) * the whole document * | 1 | |
| X | JP 2017 223273 A (SAGINOMIYA SEISAKUSHO INC) 21 December 2017 (2017-12-21) * paragraph [0031] - paragraph [0038]; figures 1,2,4 * | 1 | |

TECHNICAL FIELDS
SEARCHED (IPC)

F25B
F16K

The present search report has been drawn up for all claims

| Place of search | Date of completion of the search | Examiner |
|---|---|---|
| Munich | 1 April 2019 | Gasper, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 15 7495

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2019

| Patent document cited in search report | | Publication date | Patent family member(s) | | Publication date |
|---|---|---|---|---|---|
| WO 2017168882 | A1 | 05-10-2017 | CN | 108700208 A | 23-10-2018 |
| | | | JP | 2017180485 A | 05-10-2017 |
| | | | WO | 2017168882 A1 | 05-10-2017 |
| JP 2017180824 | A | 05-10-2017 | CN | 205479490 U | 17-08-2016 |
| | | | JP | 6480484 B2 | 13-03-2019 |
| | | | JP | 2017180824 A | 05-10-2017 |
| DE 2944593 | A1 | 14-05-1980 | BR | 7907150 A | 08-07-1980 |
| | | | DE | 2944593 A1 | 14-05-1980 |
| | | | GB | 2036262 A | 25-06-1980 |
| | | | JP | S5565773 A | 17-05-1980 |
| | | | US | 4240469 A | 23-12-1980 |
| JP 2017003107 | A | 05-01-2017 | JP | 6426644 B2 | 21-11-2018 |
| | | | JP | 2017003107 A | 05-01-2017 |
| JP 2017223273 | A | 21-12-2017 | CN | 107504728 A | 22-12-2017 |
| | | | JP | 6449196 B2 | 09-01-2019 |
| | | | JP | 2017223273 A | 21-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013227989 A